# EUROPÄISCHE PATENTSCHRIFT

(11) **EP 0 999 004 B1**
(45) Veröffentlichungstag und Bekanntmachung des Hinweises auf die Patenterteilung: **12.07.2006**
(21) Anmeldenummer: 99121698.7
(22) Anmeldetag: 02.11.1999
(51) Int. Cl.: B23B 31/28, B23B 31/12

(54) **Spannfutter für eine Werkzeugmaschine**
Chuck for a machine tool
Mandrin pour une machine-outil

(30) Priorität: 02.11.1998 DE 19850334; 08.06.1999 EP 99110962
(43) Veröffentlichungstag der Anmeldung: 10.05.2000
(73) Patentinhaber: Index-Werke GmbH & Co. KG Hahn & Tessky, 73730 Esslingen (DE)
(72) Erfinder: Dr.-Ing. Gerhard Widl, 82340 Feldafing (DE)
(74) Vertreter: Hoeger, Stellrecht & Partner Patentanwälte

(56) Entgegenhaltungen:
- DE-A- 4 312 937
- FR-A- 1 163 300
- US-A- 4 645 220

## Beschreibung

Die vorliegende Erfindung betrifft ein Verfahren zum Spannen eines zur Bearbeitung rotierenden Werkstücks gemäß Oberbegriff des Anspruchs 1 und ein Spannfutter für eine Werkzeugmaschine nach dem Oberbegriff des Anspruchs 7, 8 oder 9.

Ein solches Spannfutter ist im Stand der Technik z.B als Membranspannfutter bekannt. Ein Spannfutter der im Oberbegriff des Anspruchs 7, 8 oder 9 angegebenen Art ist aus der FR 1 163 300 A bekannt.

Bei der Materialbearbeitung mittels Werkzeugmaschinen wie Dreh-, Fräs- oder Schleifmaschinen müssen die zu bearbeitenden Werkstücke in Aufnahmevorrichtungen wie Spannfuttern derart gehalten werden, daß die bei der Bearbeitung auftretenden Kräfte die Stellung des Werkstücks in der Aufnahmevorrichtung nicht verändern.

Bei Werkstücken, die dünnwandig oder aus anderen Gründen leicht deformierbar sind, können die in einem Spannfutter auftretenden Haltekräfte das Werkstück elastisch verformen. Beim Entnehmen des bearbeiteten Werkstücks tritt dann ein Verzug auf. Die durch die Bearbeitung erzeugte hochgenaue Werkstückgeometrie geht dadurch verloren. Ein Beispiel für diese Problematik ist die Bearbeitung von Rohlingen für Getriebe-Zahnräder, die vorher im Laufe der Herstellung gehärtet werden. Diese Härtung führt zu Durchmessertoleranzen der Rohlinge. Diese führen bei Spannen mittels bekannter Spannfutter (wie Keilhakenfuttern, Spannhülsenfuttern, Membranspannfuttern oder Dehnspannfuttern) zu unterschiedlichen elastischen Verformungen für jedes einzelne Werkstück durch das Spannen. Diese unterschiedlichen elastischen Verformungen resultieren nach der Entnahme aus dem Spannfutter durch die elastische Rückverformung in nicht akzeptablen Toleranzen der Abmessungen der bearbeiteten Zahnräder.

Bisher versucht man dieses und ähnliche Probleme dadurch zu lösen, daß ein annehmbarer Kompromiß zwischen Spannkräften und akzeptablen Toleranzen durch aufwendige Versuchsreihen für jeden einzelnen Werkstücktyp gesucht wird. Mit zunehmenden Anforderungen an die Genauigkeit der Bearbeitung im µm-Bereich und Sub-µm-Bereich ist aber selbst mit solchen Versuchen kein akzeptables Ergebnis mehr erzielbar.

Insbesondere bei rotationssymmetrischen Werkstücken wie z. B. Zahnrädern mit einem Achsloch (Innenbohrung) verformen sich z. B. durch eine Wärmebehandlung beim Härten die vorher kreisrunde Innenbohrung einerseits und der vorher kreisrunde Umkreis z. B. zu ungefähren Ellipsen. Bereits durch diesen Vorgang fallen die Mittelpunkte der Innen- und Außenform gewöhnlich nicht mehr in einen Punkt.

Üblicherweise werden z. B. Zahnräder nach der Wärmebehandlung im Achsloch mit drei oder auch mehr Spannbacken gefaßt, um die außenseitige Verzahnung nachzuschleifen. Danach wird am außenseitigen Umfang oder im Teilkreis gespannt, um die Innenbohrung mit hoher Genauigkeit spanabhebend zu bearbeiten.

Herkömmliche Spannfutter bewegen während des Spannvorgangs alle Spannbacken um den gleichen Zustellweg, bis Kraftschluß erreicht wird. Dies hat z. B. bei einem 3-Backen-Spannfutter und dem Spannen im Achsloch mit ellipsenförmig verformtem Innendurchmesser zur Folge, daß das Rotationszentrum, das durch den Mittelpunkt des Spannfutters definiert ist, und der Mittelpunkt der Innenbohrung um einen ersten Betrag verschoben sind. Wird das Werkstück danach am außenseitigen Umfang oder am Teilkreis der Verzahnung gespannt, so ist der Mittelpunkt der Innenbohrung gegenüber dem Mittelpunkt des außenseitigen Umfangs um einen zweiten Betrag verschoben.

Um die beiden Mittelpunkte durch Nachbearbeitung zur Deckung zu bringen, ist normalerweise ein erheblicher Materialabtrag erforderlich. Daraus folgen ein erhöhter Werkzeugverschleiß und längere Bearbeitungszeiten. Die Bearbeitungsgenauigkeit leidet unter dem deutlich höheren Werkzeugverschleiß während der Bearbeitung einer verschobenen Innenbohrung.

Beim spanabhebenden Bearbeiten von rotierenden Werkstücken treten an der Eingriffslinie des Werkzeugs auf das Werkstück axiale, radiale und tangentiale Kräfte auf Die radialen Kräfte wirken auf die jeweilige das Werkstück gegen das Werkzeug abstützende Spannbacke eines sich drehenden Spannfutters. Insbesondere bei dünnwandigen Werkstücken müssen die Spannkräfte in Grenzen gehalten werden, um eine Verformung des Werkstücks im Spannfutter zu vermeiden. Dies kann bei herkömmlichen, mechanischen Spannfuttern dazu führen, das die radial wirkenden Bearbeitungskräfte, z.B. durch das Andrücken einer Schleifspindel, die Spannkraft einer einzelnen, gerade im Eingriff befindlichen Spannbacke übersteigen und die Spannbacke wegdrücken. Das Ergebnis sind z. B. bei Innenbohrungen Verdickungen an der Angriffsfläche der Spannbacke .

Aufgabe der Erfindung ist es, ein Verfahren zum Spannen eines Werkstücks und ein Spannfutter für eine Werkzeugmaschine, die in einfacher Weise eine Anpassung der Spannkräfte an unterschiedliche Werkstücke und unterschiedliche Bearbeitungen unter Vermeidung der obigen Probleme erlauben, anzugeben.

Diese Aufgabe wird gelöst durch ein Verfahren nach Anspruch 1 bzw. ein Spannfutter nach Anspruch 7, 8 oder 9.

Weiterbildungen der Erfindung sind in den abhängigen Ansprüchen angegeben.

Weitere Merkmale und Vorteile ergeben sich aus der folgenden Beschreibung von Ausführungsbeispielen anhand der Figuren. Von den Figuren zeigen:
- Fig. 1: eine Querschnittsdarstellung einer ersten Ausführungsform;
- Fig. 2: eine Querschnittsdarstellung einer zweiten Ausführungsform;
- Fig. 3: eine Vorderansicht der zweiten Ausführungsform;
- Fig. 4: eine Querschnittsdarstellung eines Stellmoduls; und
- Fig. 5: eine Blockdarstellung einer Steuerung.

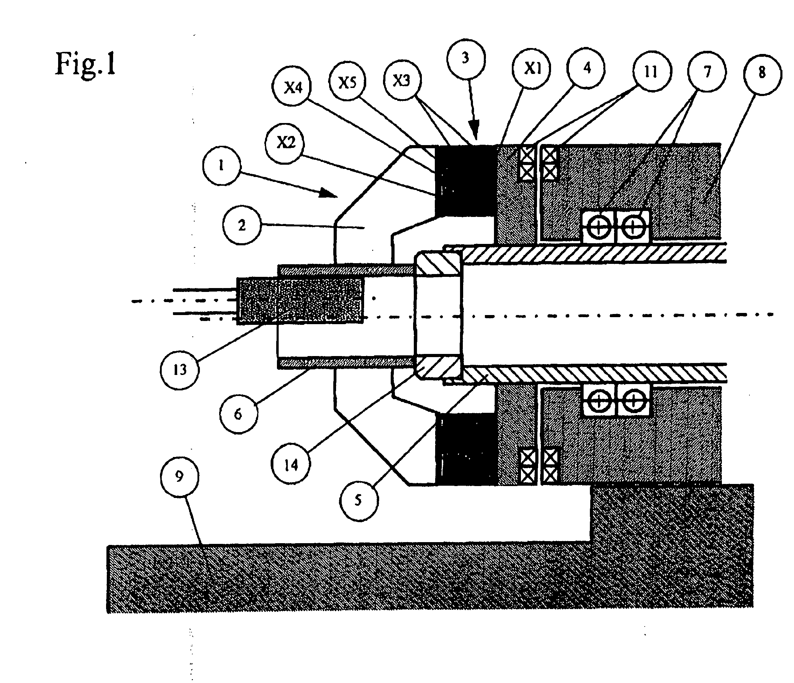

Bei der ersten Ausführungsform der Erfindung, die in Fig. 1 schematisch in einem Querschnitt längs der Drehachse A einer Spindel gezeigt ist, ist ein Spannfutter 1 mit einer Mehrzahl von Spannbacken 2 vorgesehen. Die Spannbacken 2 sind mit einer Spannfutterbasis 4 über jeweils ein Stellmodul 3 verbunden. Die Spannfutterbasis 4 ist mit der Werkstückspindel 5 der Werkzeugmaschine derart verbunden, daß die Bewegungen der Werkzeugspindel wie Drehbewegungen, Zustellbewegungen etc. an das Spannfutter 1 übertragen werden. Die Werkstückspindel 5 ist über Lager 7 mit dem Werkstückspindelaufbau 8 des Maschinenbetts 9 der Werkzeugmaschine verbunden.

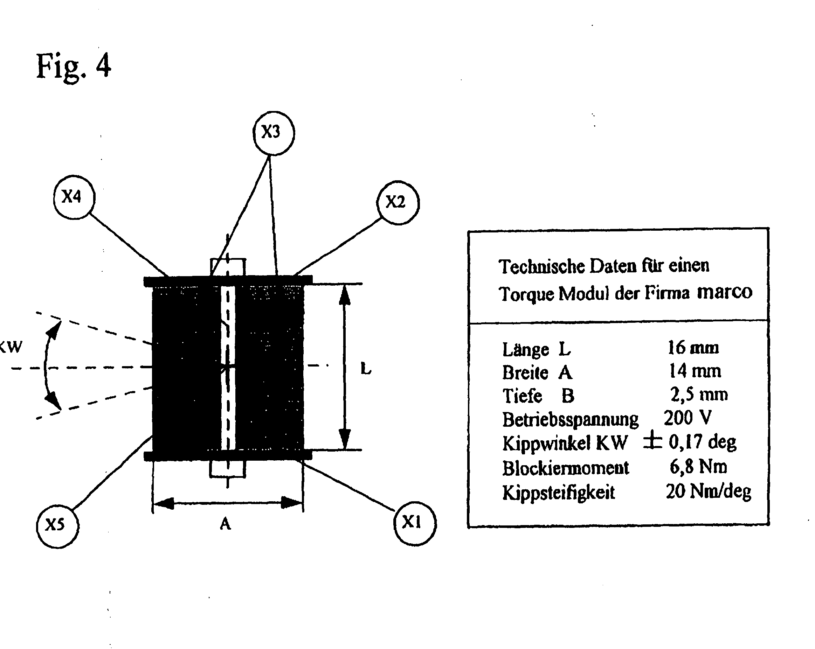

Die Stellmodule 3 bestehen jeweils aus einem Piezodrehstellelement 3. Ein solches Piezodrehstellelement 3 weist eine Grundplatte X1, die mit der Spannfutterbasis 4 verbunden ist, eine Kippplatte X2, die mit der entsprechenden Spannbacke 2 verbunden ist, Piezostellelemente X3, deren Abmessung in einer Längsrichtung in bekannter Weise durch Anlegen elektrischer Spannung steuerbar veränderlich ist, und ein Spannelement X4 auf, wobei die Stellelemente X3 derart angeordnet sind, daß ihre Längsrichtungen parallel zueinander sind und die Grundplatte X1 und die Kippplatte X2 in Längsrichtung ober- und unterhalb der Stellelemente angeordnet sind, und das Spannelement X4 mittig zwischen den beiden Stellelementen X3 angeordnet ist und die Grundplatte X1 und die Kippplatte X2 mit den zwischen diesen angeordneten Stellelementen mit einer vorbestimmten Spannung vorspannt. Die Stellelemente werden mit gegenläufigen Spannungsänderungen angesteuert, d.h. wenn an das eine Piezostellelement eine Spannungsänderung in einer Richtung (positiv oder negativ) angelegt wird, dann wird an das andere Piezostellelement eine relativ dazu entgegengesetzte (negativ oder positiv) Spannungsänderung angelegt. Daraus folgt eine gegenläufige (antisymmetrische) Längenänderung der beiden Piezostellelemente. Da die Länge des Stellmoduls 3 durch die Vorspannung mit dem Spannelement X4 festgelegt ist, wird durch die gegenläufige Längenänderung der Piezostellelemente X3 eine Drehbewegung der Kippplatte X1 um einen (virtuellen) Drehpunkt X5 verursacht. Die Stellmodule sind derart auch temperaturkompensiert, d.h. eine Temperaturänderung führt nicht zu Stellbewegungen. Ein Beispiel für Stellmodule der beschriebenen Art ist in der DE 196 46 511 C1 offenbart. Die technischen Daten eines handelsüblichen Stellmoduls dieser Art sind in der Tabelle in Fig. 4 gezeigt.

Jede Spannbacke 2 ist derart mittels des entsprechenden Stellmoduls 3 um einen (virtuellen) Drehpunkt, nämlich den Drehpunkt X5 des entsprechenden Stellmoduls bewegbar. Ein Werkstück 6 kann derart durch gesteuertes Bewegen der Spannbacken 2, wie es später beschrieben wird, gespannt werden.

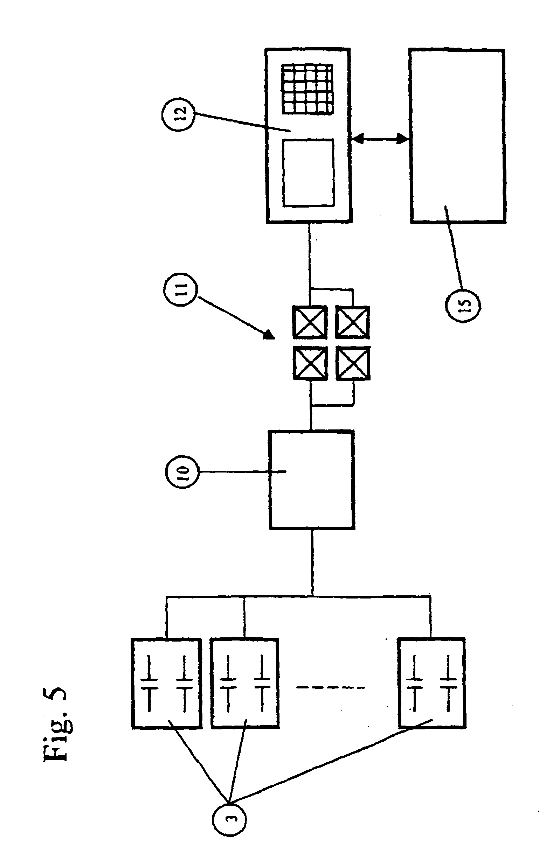

Der Steuerungsaufbau für das Spannfutter ist in Fig. 5 schematisch gezeigt. Die Stellmodule 3 weisen jeweils eine Ansteuerelektronik 10 auf, die über eine berührungslose Energie- und Datenübertragungseinrichtung 11 mit Spannung und mit Steuerdaten beliefert wird. Die Steuerdaten werden von einer Steuerung 12 für jedes der Stellmodule 3 erzeugt. Die Stellmodule 3 sind derart einzeln ansteuerbar, so daß die einzelnen Spannbacken 2 unabhängig von den anderen Spannbacken 2 in einer einfachen Weise gesteuert bewegt werden können.

Die Ansteuerelektronik 10 ist in Fig. 1 nicht gezeigt, aber sie ist bevorzugterweise zwischen und/oder hinter den Spannbacken angeordnet, so daß der Platzbedarf für die mitrotierende Ansteuerelektronik, der ohnehin gering ist, die Baugröße des Spannfutters nicht erhöht, insbesondere nicht in radialer Richtung. Die Steuerung 12 kommuniziert mit der übergeordneten Steuerung 15 der Werkzeugmaschine.

Die berührungslose Energie- und Datenübertragungseinrichtung 11 ist durch Spulen in den einander zugewandten Seiten des Werkstückspindelaufbaus (Werkstückspindelkopf) 8 und der Spannfutterbasis 4 ausgebildet, so daß auch der Platzbedarf dafür sehr gering ist. Alternativ könnte die Energie- und Datenübertragungseinrichtung kontaktierend z.B. als Schleifkontakte ausgebildet sein.

Bei der ersten Ausführungsform entfallen durch die direkte Verbindung der Spannbacken 2 mit den Stellmodulen 3 und die direkte Ansteuerung über diese alle zwischengeschalteten mechanischen Elemente. Die Anzahl der Teile sinkt dadurch deutlich und die Baugröße wird stark reduziert.

In dem Spannfutter sind bevorzugterweise Sensoren (nicht gezeigt) angeordnet, die die Spannkraft jeder Spannbacke messen. Die derart gewonnene Information wird an die Ansteuerelektronik 10 und/oder die Steuerung 12 geliefert. Weiterhin sind in dem Spannfutter bevorzugterweise entweder alternativ oder zusätzlich Sensoren (nicht gezeigt) angeordnet, die den von jeder Spannbacke zurückgelegten Stellweg erfassen. Die derart gewonnene Information wird an die Ansteuerelektronik 10 und/oder die Steuerung 12 geliefert. Derart kann einerseits über eine Umrechnungsregel von der Ansteuerelektronik 10 und/oder der Steuerung 12 die ausgeübte Spannkraft berechnet werden. Diese Lösung kann aufgrund der Kosten der Sensoren preisgünstiger als die direkte Erfassung der Spannkraft sein. Es ist alternativ auch möglich, die Spannkraft und/oder den Stellweg aus anderen Parametern, wie z.B. die Werte der an das entsprechende Stellglied angelegten bzw. gelieferten Spannung und Stromstärke, zu berechnen.

Nach einer Weiterbildung ist auf der Werkstückspindel ein Sensor 14 zum Erfassen des Anliegens des Werkstücks vorgesehen, der mit der Steuerung 12 verbunden ist.

Es wird nun ein Verfahren zum Spannen eines zur Bearbeitung rotierenden, d.h. um eine Achse gedrehten, Werkstücks als ein Verfahren zum Steuern des Spannfutters zum Spannen von Werkstücken beschrieben.

Die Spannbacken des Spannfutters, bei dem die Weg- und Krafterfassung für jede der Spannbacken in einer der oben beschriebenen Weisen verwirklicht ist, werden mit geringem Übermaß (Spannen am Innenumfang) bzw. Untermaß (Spannen am Außenumfang) auf die Sollabmessungen wie z.B. einen Durchmesser des zu bearbeitenden Werkstücks eingestellt und auf das exakte Sollmaß geschliffen. Dies ist die definierte Nullposition der Spannbacken des Spannfutters. Diese Nullpositionen werden in der Steuerung erfaßt, d.h. gespeichert. Im folgenden ist die Schließrichtung die Richtung der Bewegung einer Spannbacke in Richtung der Drehachse des Spannfutters und die Öffnungsrichtung ist die entgegengesetzte Richtung.

Das Spannfutter bzw. die einzelnen Spannbacken werden dann so geöffnet (bei Spannen am Außenumfang) oder geschlossen (bei Spannen am Innenumfang), daß das Werkstück mit den gegebenenfalls unrunden Konturen eingelegt bzw. aufgesetzt werden kann. Dann werden zunächst eine vorbestimmte Anzahl versetzter Spannbacken (z.B. drei um 120° versetzte) zur Vorzentrierung mit definierter Kraft und danach die restlichen Spannbacken ebenfalls mit definierter Kraft geschlossen bzw. geöffnet.

Die Spannbacken sind jetzt entsprechend der Kontur des Werkstücks um bestimmte Stellwege gegenüber ihren Nullpositionen verstellt, so daß sie bei einer unrunden Kontur unterschiedliche Stellwege aufweisen. Dadurch kann das Wegmeßsystem des elektronischen Spannfutters die Unrundheit des Werkstücks vermessen.

Die so ermittelten Daten über die unrunde Kontur werden im Steuerungsrechner des Spannfutters gewichtet und es wird ein virtueller Nullpunkt errechnet. Durch Stellbefehle an die Stellglieder wird das Werkstück in die optimale Position verschoben und kann dann bearbeitet werden. Hierbei kann auch ein Teil des reproduzierbaren Härteverzugs zwischen Innen- und Außenbohrung ausgeglichen werden. Nachfolgend wird ein konkretes Beispiel des Vorgangs anhand eines Zahnrades mit Achsloch als einem im Idealzustand rotationssymmetrischen Werkstück beschrieben.

Die Nullpositionen der Spannbacken berühren einen exakten Kreis um den Drehmittelpunkt des Spannfutters. Diese Tatsache wird durch das obige Schleifen auf das Sollmaß erreicht. Es wird ein XY-Koordinatensystem, dessen Ursprung im Drehmittelpunkt liegt definiert. Die Lage der X-Achse wird dabei z.B. so definiert, daß sie der Verbindung des Drehmittelpunkts mit einer vorbestimmten der Spannbacken entspricht Bei dem Zahnrad mit Achsloch kann man davon ausgehen, daß die Form der zu spannenden Innen- oder Außenform im Idealzustand konzentrisch zum Drehmittelpunkt ist. Herstellungsbedingt, insbesondere durch Härteverzug, aber auch durch Aufpressen, Schweißen, Löten, etc. von weiteren Teilen auf das Werkstück werden die Kreisformen verändert und/oder die konzentrische Anordnung gestört. Es entsteht ein Versatz, z.B. ein Planschlag, zwischen den Kreisen der Innenform und der Außenform.

Ein derartig von der konzentrischen Idealform abweichendes Zahnrad wird nun, z.B. in der Innenbohrung des Achslochs (Innenform), mit dem Spannfutter gespannt. Dabei werden die Spannbacken bis zur Berührung mit dem Werkstück jeweils um unterschiedliche Stellwege bewegt. Diese Stellwege ergeben zusammen mit dem Abstand der jeweiligen Nullposition vom Drehmittelpunkt den Abstand des jeweiligen Berührungspunktes der Spannbacken mit dem Werkstück von dem Drehmittelpunkt. Aus diesen Daten läßt sich in bekannter Weise der Flächenschwerpunkt der gespannten Form, in diesem Fall der Flächenschwerpunkt der realen Innenbohrung des Achslochs berechnen. Dieser Flächenschwerpunkt hat die Koordinaten xs, ys in dem X-Y-Koordinatensystem. Die Steuerung berechnet nun für jede Spannbacke einen Stellweg, um die Spannbacke zu verstellen ist, damit der Flächenschwerpunkt und der Drehmittelpunkt zusammenfallen und steuert die Stellglieder entsprechend zur Verschiebung des Flächenschwerpunkts um -xs, -ys an.

Dabei ist zu beachten, daß die Genauigkeit der Korrektur mit der Zahl der Spannbacken und der damit verfügbaren Meßdaten über die reale Form, die gespannt wird, steigt. Bevorzugter Weise weist das Spannfutter daher mehr als 3 Spannbacken, besonders bevorzugt 6 oder mehr Spannbacken auf.

Die obigen Korrekturwerte zur Verschiebung des Flächenschwerpunkts in den Drehmittelpunkt lassen sich bei Werkstücken, bei denen die Verformung in hohem Maß reproduzierbar ist, auch empirisch gewinnen. Die Spannbacken werden dann mit den empirisch gewonnen Korrekturwerten gestellt, wobei die Werkstücke dann allerdings in derselben Orientierung zwischen Deformierung und Spannfutter gespannt werden müssen.

Aus der Information über den Stellweg der einzelnen Spannbacken läßt sich zusätzlich eine Information über die tatsächliche Deformierung des momentan gehaltenen Werkstücks gewinnen Diese Deformationsinformation wird dann zur Berechnung der zulässigen Spannkräfte (in der vorbestimmten Regel zur Bestimmung der Spannkräfte) verwendet.

Bei der Bearbeitung wird oft zuerst eine Grobbearbeitung des eingespannten und bei der Bearbeitung um eine Drehachse gedrehten Werkstücks durch das Werkzeug 13 (z. B. einen Schleifscheibe) durchgeführt, bei der aufgrund einer starken Spanung relativ große Bearbeitungskräfte auftreten, die wiederum große Spannkräfte erfordern. Je näher die Bearbeitung an die Zielabmessungen kommt, desto feiner wird sie und damit die Spanung und damit die notwendigen Spannkräfte. Die Steuerung 12 steuert jedes Stellmodul 3 individuell derart an, daß nach einer vorbestimmten Regel zur Bestimmung der Spannkräfte diese derart bestimmten Spannkräfte durch die jeweilige Spannbacke 2 auf das Werkstück 6 ausgeübt werden. Bei grober Bearbeitung werden entsprechend höhere Spannkräfte ausgeübt, die durch Rückkopplung mittels der Sensoren exakt ausgeübt werden können. Bei feinerer Bearbeitung werden entsprechend der vorbestimmten Regel kleinere Spannkräfte ausgeübt, die dann zu einem geringeren Verzug führen.

So können die einzelnen Spannbacken 2 mittels Rückkopplung über die Sensoren in jedem Stadium der Bearbeitung zur Ausübung einer exakt vorgegebenen Spannkraft angesteuert werden, die unabhängig von der tatsächlichen Ursprungsform des jeweiligen Werkstücks auch exakt eingehalten werden kann.

Die Messung der je Spannbacke ausgeführten Stellbewegung ermöglicht es, die entsprechende Werkstückpositionierung relativ zum Werkzeug zu verschieben (z.B den Mittelpunkt eines Achslochs), um bestimmte Bearbeitungen auszuführen (z.B. unrunde Konturen ausgleichen).

Nach einer Weiterbildung wird die Bearbeitungskraft (z.B. Spankraft), die durch das Werkzeug ausgeübt wird, erfaßt. Dieses erfolgt bei rotierendem Werkzeug wie einer Schleifscheibe z.B. dadurch, daß das auf das Werkzeug ausgeübte Drehmoment durch einen geeigneten Sensor erfaßt wird, z. B. durch Erfassung des Motorstroms des eine Schleifscheibe antreibenden Motors. Bei einem feststehenden Werkzeug wie einem Drehstahl wird z.B. der Motorstrom des Werkstückantriebs erfaßt oder der Zustellwert aus der NC-Steuerung zur Berechnung der Bearbeitungskraft verwendet. Das Prinzip liegt darin, die Reaktionskraft (actio=reactio) des Werkstücks zu erhalten. Diese Größe wird dann als Regelparameter für die Berechnung der Haltekraft (Spannkraft), die durch das Spannfutter auf das gerade bearbeitete Werkstück auszuüben ist, verwendet.

Die vorbestimmte Regel kann z. B. durch eine Berechnungsregel, die in der Software des Steuerprogramms verwirklicht ist, oder durch eine Wertetabelle, die in der Steuerung abgelegt ist und z.B. eine Zuordnung von Bearbeitungskraft, Drehzahl der Werkstückspindel und Spannkraft pro Spannbacke enthält, verwirklicht sein.

Das Wegdrücken einer Spannbacke durch die Bearbeitungskraft (z.B. Spankraft), die radial auf das Werkstück und damit die jeweilige gerade das Werkstück abstützende Spannbacke wirkt, kann außerdem vermieden werden. Dazu wird das Werkstück so in das Spannfutter eingebracht, daß die Stellwege der Spannbacken gegenüber einer Nullposition (siehe oben) bekannt sind. Durch Positionsregelung jeder einzelnen Spannbacke wird diese in Position gehalten und damit das Wegdrücken verhindert. Das Stellglied der einzelnen Spannbacke gleicht so die am Eingriffsort des Werkzeugs auftretenden Radialkräfte aus. Es ist aber auch möglich, die Spannkraft der einzelnen Spannbacken entsprechend ihrer Winkelstellung relativ zum Werkzeug zu verändern. Dazu wird die jeweilige gerade das Werkstück abstützende Spannbacke so angesteuert, daß sie die auf andere Weise erfaßte Bearbeitungskraft (siehe oben) ausgleicht. Bei dieser Regelung fällt die Echt-Zeit-Erfassung und Regelung der Position jeder einzelnen Spannbacke weg, was den Datenverarbeitungsaufwand erheblich reduziert.

Die Kompensation der Fliehkräfte, die durch die Drehung des Spannfutter entstehen, kann natürlich in herkömmlicher Weise durch entsprechend angeordnete Ausgleichsgewichte an den Spannbacken, die in Fig. 1 nicht gezeigt sind erfolgen. Es ist mit der ersten Ausführungsform aber möglich, diese Fliehkräfte individuell für jede Spannbacke 2 mittels der Stellmodule 3 zu kompensieren. Ganz besonders zu bevorzugen ist ein Kombination der beiden Wege. Der Hauptteil der Fliehkräfte wird durch Gegengewichte so kompensiert, daß der Schwerpunkt der Spannbacke ungefähr im Drehpunkt X5 des Stellmoduls 3 liegt Die Variation der Fliehkräfte, die z.B. durch den Verschleiß der Spannbacken und das dadurch erforderliche Nachschleifen der Spannbacken entsteht, wird durch die Stellmodule 3 ausgeglichen. Dieser Ausgleich erfolgt in der beschriebenen rückgekoppelten Weise. Daher können selbst Deformationen der Werkstückgeometrie, die durch derartige Fliehkraftvariationen entstehen könnten, ausgeglichen werden. Das ist bei den mittlerweile auftretenden Drehzahlen der Werkstückspindeln von bis zu 10.000 U/min ein nicht zu vernachlässigender Vorteil.

Die individuell geregelte Einstellen der Spannkräfte könnte grundsätzlich auch mittels hydraulischer oder pneumatischer Lösungen bewerkstelligt werden. Aufgrund von sogenannten Stick-Slip-Effekten, d.h. der durch die vergleichsweise hohe innere Reibung solcher Systeme in mechanischen Lagern und Stellgliedern hervorgerufenen Effekte, daß Änderungen der ausgeübten Kräfte nur in relativ großen Änderungsschritten erfolgen können, sind hochgenaue Einstellungen aber nur mit sehr hohem Aufwand möglich. Bei der ersten Ausführungsform werden aber Stellmodule verwendet, die eine relativ geringe innere Reibung aufweisen und daher mit vergleichsweise niedrigem Aufwand eine hochgenaue Steuerung erlauben.

Nach einer weiteren Weiterbildung werden die Spannbacken in herkömmlicher Weise bis zu einer vorbestimmten Stellung der Spannbacken 2 in Kontakt mit dem Werkstück 6 oder nahe des Werkstücks 6 gestellt. Dieses erfolgt z.B. dadurch, daß der Teil der Spannfutterbasis 4, an dem die Stellmodule 3 angebracht sind, als Membranspannfutter oder Keilhakenspannfutter o.ä. (nicht gezeigt) ausgebildet ist. Dieses herkömmliche Spannfutter wird dann in bekannter Weise bis zu der vorbestimmten Stellung relativ zu dem Werkstück 6 betrieben und dann in dieser Stellung verriegelt. Der weitere Stellweg der einzelnen Spannbacken 2 wird dann in der oben beschriebenen Weise eingestellt. Dadurch können die Stellmodule 3 und der Übertragungsweg ihrer Stellbewegung so ausgebildet werden, daß nur eine sehr kleiner Teil des notwendigen Gesamtstellwegs von diesen geliefert wird.

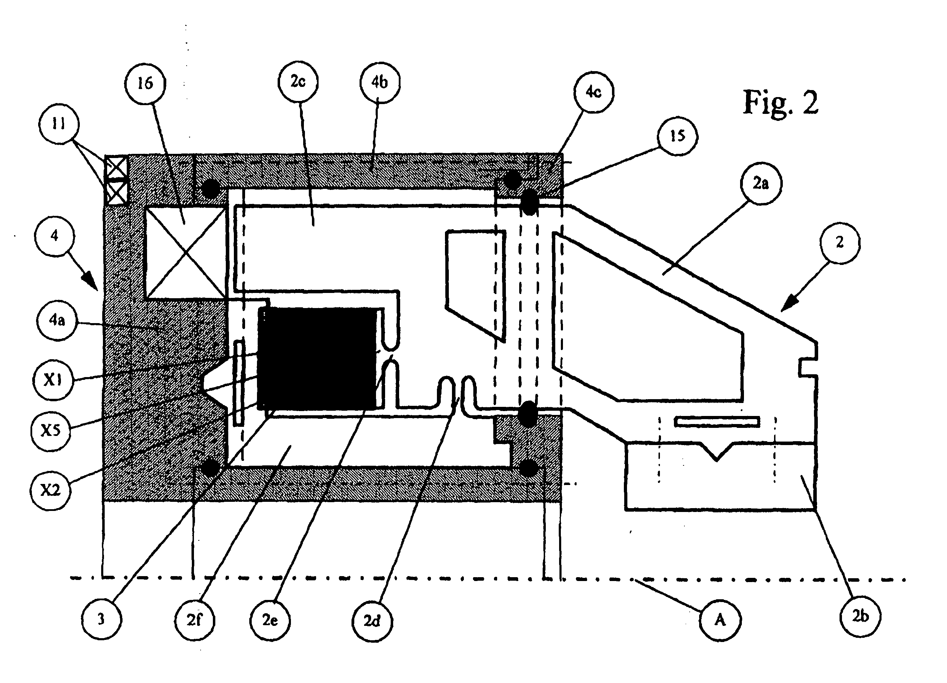

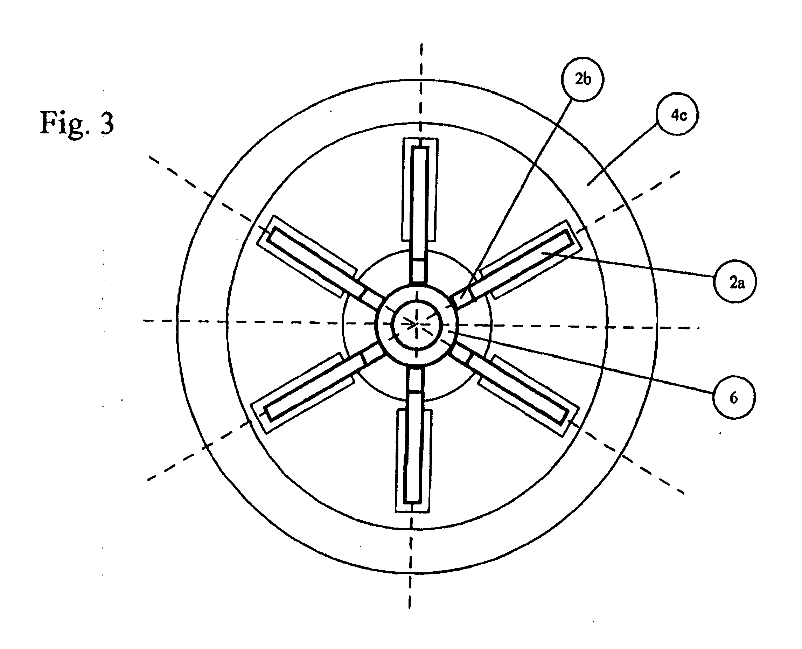

Unter Bezugnahme auf die Fig. 2 und 3 wird nun eine zweite Ausführungsform des Spannfutters beschrieben. Bis auf die nachfolgend beschriebenen Unterschiede entspricht der Aufbau und die Steuerung der zweiten Ausführungsform der ersten Ausführungsform Abschnitte und Teile, die dieselben oder vergleichbare Funktionen haben, sind mit denselben Bezugszeichen wie bei der ersten Ausführungsform bezeichnet. Die zweite Ausführungsform der Erfindung ist in Fig. 2 schematisch in einem Querschnitt längs der Drehachse A einer Spindel so gezeigt, daß nur der oberhalb der Drehachse gelegene Abschnitt des Spannfutters 1 gezeigt ist.

Das Spannfutter 1 ist mit einer Mehrzahl von Spannbacken 2 (z.B. 6 Spannbacken, wie es in Fig. 3 gezeigt ist) vorgesehen, die jeweils einen Bewegungsabschnitt 2a, ein auswechselbares Spannbackenendstück 2b, einen Ausgleichsgewichtsabschnitt 2c, ein Biegegelenk 2d, einen Stellmodulverbindungsabschnitt 2e und einen L-förmigen Basisverbindungsabschnitt 2f aufweisen. Der Bewegungsabschnitt 2a, der Ausgleichsgewichtsabschnitt 2c, das Biegegelenk 2d, der Stellmodulverbindungsabschnitt 2e und der Basisverbindungsabschnitt 2f sind einstückig ausgebildet, wobei das Biegegelenk 2d den Bewegungsabschnitt 2a und den Basisverbindungsabschnitt 2f gelenkig verbindet.

Jeweils ein Stellmodul 3 ist in eine Spannbacke 2 zwischen den Stellmodulverbindungsabschnitt 2e und den Basisverbindungsabschnitt 2f eingesetzt. Der Stellmodulverbindungsabschnitt 2e weist einen der Kippplatte X2 zugewandten und mit dieser verbundenen Plattenabschnitt auf. Der L-förmige Basisverbindungsabschnitt 2f weist die Form eines liegenden L auf, wobei das Unterteil des L eine Ausnehmung aufweist, in die die Grundplatte X1 des Stellmoduls 3 eingesetzt ist. Derart sind das Stellmodul 3 und der Stellmodulverbindungsabschnitt 2e und der Basisverbindungsabschnitt 2f kraftschlüssig verbunden, so daß Stellbewegungen (Kippbewegungen der Kippplatte X2 um den Drehpunkt X5 relativ zur Grundplatte X1) des Stellmoduls 3 zu entsprechenden Drehbewegungen des Bewegungsabschnitts 2a relativ zu dem Basisverbindungsabschnitt 2f um das Drehgelenk 2d führen.

Das Spannfutter weist eine Spannfutterbasis 4 auf, die einen Spannfutterbasisgrundabschnitt 4a, einen Spannfutterbasisstirnabschnitt 4c und einen Spannfutterbasisverbindungsabschnitt 4b, der diese verbindet, aufweist. Der L-förmige Basisverbindungsabschnitt 2f ist mit der Spannfutterbasis 4 fest verbunden, z.B. durch Vorsprünge, die in Ausnehmungen der Spannfutterbasis eingesetzt sind, und durch Schraubbolzen etc.. Dadurch sind auch die Grundplatten X1 der Stellmodule 3 der einzelnen Spannbacken 2 (über den dazwischen angeordneten Basisverbindungsabschnitt 2f) fest mit der Spannfutterbasis 4 verbunden. Der um die einzelnen Spannbacken befindliche Bewegungsfreiraum in dem Spannfutter ist durch eine Dichtung 15 gegen das Eindringen von Schmutz und Bearbeitungsrückständen wie Spänen und Schmier- und Kühlmittelreste geschützt. In dem Spannfutterbasisgrundabschnitt 4a ist ein Hohlraum 16 zur Aufnahme der Ansteuerelektronik (siehe 10 in Fig. 5) des Stellmoduls 3 vorgesehen. Der zu dem Spannfutter gehörige Teil der berührungslosen Energie- und Datenübertragungseinrichtung 11 ist mit dem Hohlraum 16 verbunden.

Bei der zweiten Ausführungsform sind die Spannbacken 2 mit den Stellmodulen 3 ebenfalls direkt verbunden. Die Auslenkung der Spannbacken erfolgt direkt aber unter Umlenkung durch das Biegegelenk 2d. Die innere Reibung solcher Biegegelenke ist aber vergleichsweise klein, so daß auch mit der zweiten Ausführungsform eine sehr genaue Ansteuerung der einzelnen Spannbacken gewährleistet ist. Die Anzahl der Teile sinkt ebenfalls deutlich und die Baugröße ist ebenfalls stark reduziert.

Nach einer Weiterbildung der Erfindung ist das Biegegelenk nicht wie bei der in Fig. 2 gezeigten Ausführungsform auf der der Drehachse A zugewandten Seite der Spannbacke sondern auf der der Drehachse abgewandten Seite ausgebildet. Dadurch wird die Hauptbelastung des Biegegelenks eine Druckbelastung anstatt einer Zugbelastung.

Die zweite Ausführungsform kann die Weiterbildungen der ersten Ausführungsform aufweisen.

Die bei rotierendem Spannfutter mittels der Spannkraftsensoren und/oder Stellwegsensoren ermittelten Werte zeigen, wenn keine Bearbeitungskraft ausgeübt wird, eine eventuelle Unwucht des Spannfutters. Die derart ermittelte Unwucht kann dann durch Ausgleichsgewichte korrigiert werden. Solche Ausgleichsgewichte können z.B. als mittels Stellschrauben einstellbare Ausgleichsgewichte oder zwischen kleinen Tanks umpumbare Flüssigkeiten vorgesehen sein.

Das Spannfutter nach den Ausführungsformen der Erfindung ermöglicht es, die ausgeübte Spannkraft in sehr feinen Anstufungen zu regeln.

Die kompakte Bauweise der Spannbacken und der Stellglieder ermöglicht es, eine große Anzahl von Spannbacken in dem Spannfutter aufzunehmen ohne die Baugröße stark zu erhöhen Je größer die Anzahl der Spannbacken ist, desto feiner kann die ausgeübte Spannkraft auf das Werkstück verteilt werden und die auf einen bestimmten Abschnitt des Werkstücks ausgeübte Spannkraft geregelt werden.

## Patentansprüche

1. Verfahren zum Spannen eines zur Bearbeitung um eine Drehachse rotierenden Werkstücks in einem Spannfutter einer Werkzeugmaschine, das eine Spanneinrichtung mit einer Mehrzahl von Spannbacken (2), die jeweils zum Einspannen und Halten des Werkstücks aus einer Öffnungsstellung in eine Haltestellung bewegbar sind, und eine Stelleinrichtung zum Bewegen der Spannbacken (2) in die Öffnungsstellung und die Haltestellung aufweist, **gekennzeichnet durch** die Schritte :
Erfassen der Grundstellung der Spannbacken,
Bewegen der Spannbacken zum Halten des Werkstücks mit einer vorbestimmten Spannkraft,
Erfassen des von jeder Spannbacke zurückgelegten Stellwegs,
Berechnen der aktuellen Lage einer Kontur des Werkstücks relativ zur Drehachse auf der Basis der erfaßten Stellwege, und
Bewegen der Spannbacken derart, daß die Werkstückkontur in eine vorbestimmte Lage relativ zur Drehachse gebracht wird

2. Verfahren nach Anspruch 1, **dadurch gekennzeichnet,**
**daß** beim Berechnen der aktuellen Lage der Kontur des Werkstücks ein virtueller Mittelpunkt des Werkstücks und dessen Lage relativ zur Drehachse auf der Basis der erfaßten Stellwege berechnet werden.

3. Verfahren nach Anspruch 2, **dadurch gekennzeichnet,**
**daß** der virtuelle Mittelpunkt des Werkstücks in die vorbestimmte Lage relativ zur Drehachse gebracht wird.

4. Verfahren nach einem der Ansprüche 1 bis 3, **gekennzeichnet durch** die Schritte:
Ermitteln der von der Werkzeugmaschine auf das eingespannte Werkstück (6) ausgeübten Bearbeitungskraft,
Bestimmen der aufgrund der ermittelten Bearbeitungskraft zur Einspanrmung des Werkstücks (6) notwendigen Einspannkraft, und
individuelles Ansteuern der Spannbacken (2) derart, daß die Spannbacken (2) die notwendige Spannkraft ausüben.

5. Verfahren nach Anspruch 4, **dadurch gekennzeichnet,**
**daß** die Bearbeitungskraft durch ein Werkzeug auf das rotierende Werkstück ausgeübt wird und
**daß** die individuelle Ansteuerung entsprechend der aktuellen Winkelstellung der Spannbacken relativ zu dem Werkzeug erfolgt.

6. Verfahren nach einem der Ansprüche 1 bis 5, **gekennzeichnet durch** die Schritte:
Erfassen der Veränderung der Stellwege aufgrund einer von der Werkzeugmaschine auf das eingespannte Werkstück (6) ausgeübten Bearbeitungskraft, und
individuelles Ansteuern der Spannbacken (2) derart, dass die Veränderung der Stellwege ausgeglichen wird.

7. Spannfutter für eine Werkzeugmaschine zum Einspannen eines Werkstücks, mit einer Spanneinrichtung mit einer Mehrzahl von Spannbacken (2), die jeweils zum Einspannen und Halten eines Werkstücks aus einer Öffnungsstellung in eine Haltestellung bewegbar sind, und
einer Stelleinrichtung zum Bewegen der Spannbacken (2) in die Öffnungsstellung und die Haltestellung,
**dadurch gekennzeichnet,**
**dass** die Stelleinrichtung derart ausgebildet ist, dass jede der Spannbacken (2) einzeln und unabhängig zur Bewegung ansteuerbar ist, und
**dass** für jede Spannbacke ein Sensor zur Erfassung der von der Spannbacke ausgeübten Spannkraft vorgesehen ist.

8. Spannfutter für eine Werkzeugmaschine zum Einspannen eines Werkstücks, mit einer Spanneinrichtung mit einer Mehrzahl von Spannbacken (2), die jeweils zum Einspannen und Halten eines Werkstücks aus einer Öffnungsstellung in eine Haltestellung bewegbar sind, und
einer Stelleinrichtung zum Bewegen der Spannbacken (2) in die Öffnungsstellung und die Haltestellung,
**dadurch gekennzeichnet,**
**dass** die Stelleinrichtung derart ausgebildet ist, dass jede der Spannbacken (2) einzeln und unabhängig zur Bewegung ansteuerbar ist, und
**dass** für jede Spannbacke ein Sensor zur Erfassung des von der Spannbacke gegenüber einer Grundstellung zurückgelegten Stellwegs vorgesehen ist.

9. Spannfutter für eine Werkzeugmaschine zum Einspannen eines Werkstücks, mit einer Spanneinrichtung mit einer Mehrzahl von Spannbacken (2), die jeweils zum Einspannen und Halten eines Werkstücks aus einer Öffnungsstellung in eine Haltestellung bewegbar sind, und
einer Stelleinrichtung zum Bewegen der Spannbacken (2) in die Öffnungsstellung und die Haltestellung,
**dadurch gekennzeichnet,**
**dass** die Stelleinrichtung derart ausgebildet ist, dass jede der Spannbacken (2) einzeln und unabhängig zur Bewegung ansteuerbar ist, und
**dass** für jede Spannbacke ein Sensor zur Erfassung der von der Spannbacke ausgeübten Spannkraft und des von der Spannbacke gegenüber einer Grundstellung zurückgelegten Stellwegs vorgesehen ist.

10. Spannfutter nach einem der Ansprüche 7 bis 9, **dadurch gekennzeichnet, dass** die Stelleinrichtung eine Mehrzahl von Stellgliedern (3) aufweist, von denen jedes so ausgebildet ist, dass es einzeln steuerbar und dass es jeweils mit einer entsprechenden Spannbacke (2) verbunden ist.

11. Spannfutter nach einem der Ansprüche 7 bis 10, **dadurch gekennzeichnet,**
**dass** jedes der Stellglieder ein Medium aufweist, das eine elektrisch und/oder magnetisch steuerbar veränderliche Abmessung aufweist.

12. Spannfutter nach einem der Ansprüche 7 bis 11, **dadurch gekennzeichnet,**
**dass** die Stelleinrichtung ein erstes Stellmittel mit einer Mehrzahl von Stellgliedern (3) und ein zweites Stellmittel zum Bewegen der Spannbacken (2) aufweist,
**dass** das zweite Stellmittel die Spannbacken (2) über einen ersten Teil des Weges zwischen der Öffnungsstellung und der Haltestellung bewegt und das erste Stellmittel über den anderen Teil, und
**dass** das zweite Stellmittel verriegelbar ist.

## Claims

1. Method for clamping a workpiece which, for machining, rotates about an axis of rotation in a chuck of a machine tool, the chuck comprising a clamping device with a plurality of clamping jaws (2) which are
each movable from an open position to a holding position for clamping and holding the workpiece, and an adjustment device for moving the clamping jaws (2) into the open position and into the holding position, **characterized by** the steps of:
detecting the basic position of the clamping jaws,
moving the clamping jaws for holding the workpiece with a predetermined clamping force,
detecting the adjustment path travelled by each clamping jaw, calculating the current position of a contour of the workpiece relative to the axis of rotation on the basis of the adjustment paths detected, and so moving the clamping jaws that the workpiece contour is brought into a predetermined position relative to the axis of rotation.

2. Method in accordance with claim 1, **characterized**
**in that** when calculating the current position of the workpiece contour, a virtual central point of the workpiece and its position relative to the axis of rotation are calculated on the basis of the adjustment paths detected.

3. Method in accordance with claim 2, **characterized**
**in that** the virtual central point of the workpiece is brought into the predetermined position relative to the axis of rotation.

4. Method in accordance with any one of claims 1 to 3, **characterized by** the steps of:
determining the machining force exerted by the machine tool on the clamped workpiece (6),
determining the clamping force necessary for clamping the workpiece (6) on the basis of the determined machining force, and
so controlling the clamping jaws (2) individually that the clamping jaws (2) exert the necessary clamping force.

5. Method in accordance with claim 4, **characterized**
**in that** the machining force is exerted on the rotating workpiece by a tool, and
**in that** the individual controlling is carried out in accordance with the current angular position of the clamping jaws relative to the tool.

6. Method in accordance with any one of claims 1 to 5, **characterized by** the steps of:
detecting the change in the adjustment paths on the basis of a machining force exerted on the clamped workpiece (6) by the machine tool, and
so controlling the clamping jaws (2) individually that the change in the adjustment paths is evened out.

7. Chuck for a machine tool for clamping a workpiece, comprising
a clamping device with a plurality of clamping jaws (2) which are each movable from an open position to a holding position for clamping and holding a workpiece, and
an adjustment device for moving the clamping jaws (2) into the open position and into the holding position,
**characterized**
**in that** the adjustment device is so designed that each of the clamping jaws (2) is individually and independently controllable for its movement, and
**in that** each clamping jaw is provided with a sensor for detecting the clamping force exerted by the clamping jaw.

8. Chuck for a machine tool for clamping a workpiece, comprising a clamping device with a plurality of clamping jaws (2) which are each movable from an open position to a holding position for clamping and holding a workpiece, and
an adjustment device for moving the clamping jaws (2) into the open position and into the holding position,
**characterized**
**in that** the adjustment device is so designed that each of the clamping jaws (2) is individually and independently controllable for its movement, and
**in that** each clamping jaw is provided with a sensor for detecting the adjustment path travelled by the clamping jaw with respect to a basic position.

9. Chuck for a machine tool for clamping a workpiece, comprising
a clamping device with a plurality of clamping jaws (2) which are each movable from an open position to a holding position for clamping and holding a workpiece, and
an adjustment device for moving the clamping jaws (2) into the open position and into the holding position,
**characterized**
**in that** the adjustment device is so designed that each of the clamping jaws (2) is individually and independently controllable for its movement, and
**in that** each clamping jaw is provided with a sensor for detecting the clamping force exerted by the clamping jaw and the adjustment path travelled by the clamping jaw with respect to a basic position.

10. Chuck in accordance with any one of claims 7 to 9, **characterized**
**in that** the adjustment device comprises a plurality of adjustment members (3), each of which is designed so as to be individually controllable and respectively connected to a corresponding clamping jaw (2).

11. Chuck in accordance with any one of claims 7 to 10, **characterized**
**in that** each of the adjustment members comprises a medium having a dimension which is alterable in an electrically and/or magnetically controllable manner.

12. Chuck in accordance with any one of claims 7 to 11, **characterized**
**in that** the adjustment device comprises a first adjustment means with a plurality of adjustment members (3), and a second adjustment means for moving the clamping jaws (2),
**in that** the second adjustment means moves the clamping jaws (2) over a first part of the path between the open position and the holding position, and the first adjustment means over the other part, and
**in that** the second adjustment means is lockable.

## Revendications

1. Procédé pour serrer une pièce d'oeuvre, qui, pour son usinage, est en rotation autour d'un axe de rotation, dans un mandrin de serrage d'une machine-outil, ce mandrin de serrage comprenant un dispositif de serrage avec plusieurs mors de serrage (2) qui, pour serrer et maintenir la pièce d'oeuvre, peuvent chacun être déplacés d'une position d'ouverture dans une position de maintien, et ce mandrin de serrage comprenant également un dispositif d'actionnement pour déplacer les mors de serrage (2) dans la position d'ouverture et dans la position de maintien, **caractérisé par** les étapes :
relevé de la position initiale des mors de serrage,
déplacement des mors de serrage pour le maintien de la pièce d'oeuvre avec une force de serrage prédéterminée,
relevé de la course de déplacement parcourue par chaque mors de serrage,
calcul de la position actuelle d'un contour de la pièce d'oeuvre par rapport à l'axe de rotation sur la base des courses de déplacement relevées, et
déplacement des mors de serrage de manière à amener le contour de la pièce d'oeuvre dans une position prédéterminée par rapport à l'axe de rotation.

2. Procédé selon la revendication 1, **caractérisé en ce que** lors du calcul de ladite position actuelle du contour de la pièce d'oeuvre, on calcule un centre virtuel de la pièce d'oeuvre et sa position par rapport à l'axe de rotation, sur la base des courses de déplacement relevées.

3. Procédé selon la revendication 2, **caractérisé en ce que** l'on amène le centre virtuel de la pièce d'oeuvre dans la position prédéterminée par rapport à l'axe de rotation.

4. Procédé selon l'une des revendications 1 à 3, **caractérisé par** les étapes :
détermination de la force d'usinage exercée par la machine-outil sur la pièce d'oeuvre (6) serrée,
détermination de la force de serrage nécessaire au serrage de la pièce (6) en raison de la force d'usinage ayant été déterminée, et
commande individuelle des mors de serrage (2) de façon à ce que les mors de serrage (2) exercent la force de serrage nécessaire.

5. Procédé selon la revendication 4, **caractérisé en ce que** la force d'usinage est exercée par un outil sur la pièce d'oeuvre en rotation, et **en ce que** ladite commande individuelle se fait conformément à la position angulaire actuelle des mors de serrage par rapport à l'outil.

6. Procédé selon l'une des revendications 1 à 5, **caractérisé par** les étapes :
relevé de la variation des courses de déplacement en raison d'une force d'usinage exercée par la machine-outil sur la pièce d'oeuvre (6) serrée, et
commande individuelle des mors de serrage (2) de façon à ce que la variation des courses de déplacement soit compensée.

7. Mandrin de serrage pour une machine-outil, destiné à serrer une pièce d'oeuvre et comprenant un dispositif de serrage avec plusieurs mors de serrage (2), qui, pour serrer et maintenir la pièce d'oeuvre, peuvent chacun être déplacés d'une position d'ouverture dans une position de maintien, et comprenant également un dispositif d'actionnement pour déplacer les mors de serrage (2) dans la position d'ouverture et la position de maintien, **caractérisé en ce que** le dispositif d'actionnement est réalisé de manière à ce que chacun des mors de serrage (2) puisse être commandé individuellement et indépendamment pour le déplacement, et **en ce que** pour chaque mors de serrage il est prévu un capteur pour relever la force de serrage exercée par le mors de serrage.

8. Mandrin de serrage pour une machine-outil, destiné à serrer une pièce d'oeuvre et comprenant un dispositif de serrage avec plusieurs mors de serrage (2), qui, pour serrer et maintenir la pièce d'oeuvre, peuvent chacun être déplacés d'une position d'ouverture dans une position de maintien, et comprenant également un dispositif d'actionnement pour déplacer les mors de serrage (2) dans la position d'ouverture et la position de maintien, **caractérisé en ce que** le dispositif d'actionnement est réalisé de manière à ce que chacun des mors de serrage (2) puisse être commandé individuellement et indépendamment pour le déplacement, et **en ce que** pour chaque mors de serrage il est prévu un capteur pour relever la course de déplacement couverte par le mors de serrage par rapport à une position initiale.

9. Mandrin de serrage pour une machine-outil, destiné à serrer une pièce d'oeuvre et comprenant un dispositif de serrage avec plusieurs mors de serrage (2), qui, pour serrer et maintenir la pièce d'oeuvre, peuvent chacun être déplacés d'une position d'ouverture dans une position de maintien, et comprenant également un dispositif d'actionnement pour déplacer les mors de serrage (2) dans la position d'ouverture et la position de maintien, **caractérisé en ce que** le dispositif d'actionnement est réalisé de manière à ce que chacun des mors de serrage (2) puisse être commandé individuellement et indépendamment pour le déplacement, et **en ce que** pour chaque mors de serrage il est prévu un capteur pour relever la force de serrage exercée par le mors de serrage et la course de déplacement couverte par le mors de serrage par rapport à une position initiale.

10. Mandrin de serrage selon l'une des revendications 7 à 9, **caractérisé en ce que** le dispositif d'actionnement comprend plusieurs organes d'actionnement (3) dont chacun est réalisé de façon à pouvoir être commandé individuellement et de façon à être relié à un mors de serrage (2) respectivement correspondant.

11. Mandrin de serrage selon l'une des revendications 7 à 10, **caractérisé en ce que** chacun des organes d'actionnement comprend un milieu constitutif qui présente une dimension qu'il est possible de faire varier par commande électrique et/ou magnétique.

12. Mandrin de serrage selon l'une des revendications 7 à 11, **caractérisé en ce que** le dispositif d'actionnement comprend un premier moyen d'actionnement avec plusieurs organes d'actionnement (3) et un deuxième moyen d'actionnement pour déplacer les mors de serrage (2), **en ce que** le deuxième moyen d'actionnement déplace les mors de serrage (2) sur une première partie de la course de déplacement entre la position d'ouverture et la position de maintien, et le premier moyen d'actionnement sur l'autre partie, et **en ce que** le deuxième moyen d'actionnement peut être verrouillé.
